# EUROPÄISCHE PATENTSCHRIFT

(11) **EP 2 613 962 B1**
(45) Veröffentlichungstag und Bekanntmachung des Hinweises auf die Patenterteilung: **29.04.2015**
(21) Anmeldenummer: 11767390.5
(22) Anmeldetag: 01.09.2011
(51) Int. Cl.: B60M 1/18

(54) **STRECKENTRENNEINRICHTUNG FÜR EINE STROMSCHIENEN-OBERLEITUNGSANLAGE**
TRACK ISOLATING DEVICE FOR A BUSBAR OVERHEAD LINE INSTALLATION
DISPOSITIF DE SECTIONNEMENT POUR UNE INSTALLATION DE FILS DE CONTACT DE RAILS CONDUCTEURS

(30) Priorität: 09.09.2010 DE 102010040494
(43) Veröffentlichungstag der Anmeldung: 17.07.2013
(73) Patentinhaber: Siemens Aktiengesellschaft, 80333 München (DE)
(72) Erfinder: HAHN, Gunter, 91353 Hausen (DE)
(86) Internationale Anmeldenummer: PCT/EP2011/065073
(87) Internationale Veröffentlichungsnummer: WO 2012/031967

(56) Entgegenhaltungen:
- CN-Y- 201 317 285
- DE-B- 1 163 895
- DE-B- 1 173 509
- DE-B- 1 290 164

## Beschreibung

Die Erfindung betrifft eine Streckentrenneinrichtung für eine Stromschienen-Oberleitungsanlage zur Energieeinspeisung in ein elektrisches Triebfahrzeug nach dem Oberbegriff des Patentanspruches 1.

Die Energieeinspeisung in elektrische Triebfahrzeuge erfolgt im Nah- und Fernbahnverkehr überwiegend über Oberleitungsanlagen, bei welchen ein unter Speisespannung setzbarer Fahrdraht über einer das Triebfahrzeug führenden Gleisanlage gehalten wird. Als Tragwerk für den Fahrdraht dienen neben Kettenwerken auch Stromschienen, wobei letztere weitgehend starr ausgebildet sind und damit eine hohe Biegesteifigkeit aufweisen. Ein Vorteil von Stromschienen-Oberleitungsanlagen ist deren geringe Bauhöhe, weshalb sie vor allem zur Traktionsversorgung bei beengten Raumverhältnissen eingesetzt werden - vor allem in Tunneln, unter Brücken sowie auf Hubbrücken und in Wartungshallen. Oberleitungsanlagen sind in einzelne Schalt- und Speiseabschnitte unterteilt, die unter anderem durch sogenannte Streckentrenneinrichtungen, kurz auch Streckentrenner genannt, elektrisch voneinander isoliert werden. Streckentrenner für Kettenwerk-Oberleitungsanlagen können systembedingt nicht für Stromschienen-Oberleitungsanlagen eingesetzt werden.

Die DE1290164 offenbart einen Streckentrenner für flexibel aufgehängte elektrische Fahrleitungen mit einem zwischen zwei Fahrdrahtendklemmen angeordneten geschliffenen Stabisolator und zwei federnden Stromschienen, die dafür vorgesehen sind, harte Schläge beim Befahren des Streckentrenners für elektrische Fahrleitungen zu vermeiden. Die Stromschienen dienen zum Führen des Fahrdrahtes beim Befahren des Überbrückungsabstands zwischen zwei hintereinander angeordneten Fahrdrahtabschnitten und sind daher räumlich parallel zum Stabisolator angeordnet.

Aus der internationalen Patentanmeldung WO 99/03700 A1 ist eine Stromschienenanordnung für elektrisch angetriebene Fahrzeuge bekannt, bei der zwei weitgehend starre Stromschienen linienflüchtig angeordnet sind. Gegenüberliegende Enden der Stromschienen haben einen Abstand voneinander, wobei an diesen Enden je ein Übergangshorn angebracht ist. Die Übergangshörner ragen in einen zwischen den Stromschienen liegenden Übergangsbereich. Auf einem Abschnitt des Übergangsbereiches sind die Übergangshörner weitgehend parallel und in einem Ab-stand zueinander, weitgehend parallel zu einer Fahrebene des Fahrzeugs und schräg in Bezug auf Längsachsen der Stromschienen angeordnet. Die Übergangshörner sind elektrisch und mechanisch voneinander entkoppelt, ihr Mittenabstand beträgt 55 mm, um bei einer Betriebsspannung von 1,5 kV einen ausreichenden Isolationsabstand einzuhalten.

Die europäische Patentanmeldung EP 1 932 712 A1 offenbart eine Streckentrenneinrichtung für eine Stromschienen-Oberleitungsanlage, die sowohl als konventioneller als auch als neutraler Streckentrenner eingesetzt werden kann. Sie weist zwei Stromschienensegmente auf, die durch Verbindungsflansche mit den Stromschienen der Oberleitungsanlage gekoppelt werden können. Die Stromschienensegmente weisen ein Profil auf, dessen unteres Ende ein Gehäuse bildet. Sie weist ferner eine zwischen den Stromschienensegmenten angeordnete Mittelkufe auf, die eine auf den genannten Segmenten lagernde horizontale Grundplatte und einen zur Oberleitungsrichtung schräg verlaufenden vertikalen Kernsteg umfasst. Am Kernsteg ist eine Reihe von Klemmeinrichtungen zur Befestigung eines Isolationsdrahts angeordnet. In das Gehäuse der Stromschienensegmente ist jeweils eines von zwei Funkenhörnern eingeführt, in welchen sich das elektrische Feld bricht. Sie erstrecken sich bis zur Grundplatte der Mittelkufe, an der sie über ein System zur Höheneinstellung befestigt sind. Schließlich weist die Streckentrenneinrichtung Mittel zur Überbrückung der Mittelkufe auf, um die Betriebsweise des Isolators als konventionellen oder neutralen Streckentrenner einstellen zu können.

Auf der Internetseite www.gallana-sas.com/IMG/jpg JG2117-Rail ind C - IS 1500-3000 V suspension-rigide - COM. jpq ist eine Streckentrenneinrichtung für Stromschienen-Oberleitungsanlagen offenbart, die zwei einen Fahrdraht haltende Anschlussstromschienen aufweist. Deren Abstand wird durch ein Isolatorbauteil mit einem unteren Zug- und einem oberen Druckisolator überbrückt. Das Isolatorbauteil umfasst zwei Einspannvorrichtungen, die einerseits die Isolatoren aufnehmen und andererseits mittels Befestigungsspangen an jeweils einer Anschlussstromschiene angelenkt sind. An den Einspannvorrichtungen sind seitlich jeweils zwei Schleifkufen befestigt, die an ihren stromschienenseitigen Enden kufenartig nach oben gebogen sind und an ihren isolatorseitigen Enden in nach oben stehende Funkenhörner münden.

Während die aus WO 99/03700 A1 und EP 1 932 712 A1 bekannten Streckentrenneinrichtungen aufwendige Sonderkonstruktionen ohne Isolatorüberbrückung darstellen, verwendet der Streckentrenner JG2117-Rail zwei teuere Sonderisolatoren, die an den Anschlussstromschienen angelenkt sind. Hierdurch können bei der Befahrung beim Überbrücken der Schleifkufen kurzzeitige vertikale Höhenbewegungen der Wippe des Stromabnehmers auftreten, was zu Kontaktkraftschwankungen im weiteren Befahrungsabschnitt führen kann. Diese Schwankungen können sich durch die starren Stromschienen nur sehr schwer wieder abbauen, was die Befahrungsgüte mindert. Das Isolatorbauteil wird durch ein System von vier Schleifkufen überbrückt, deren Lage aufwendig einzustellen ist. Die Funkenhörner sind direkt auf Höhe des Isolatorbauteils angeordnet, was im Fall eines Funkenüberschlags zu dessen Beschädigung führen kann. Die Bauweise des JG2117-Rail ist nur für eine niedrige Speisespannung von 1,5 bis 3,0 kV im Gleichstrombereich geeignet.

Der Erfindung liegt daher die Aufgabe zugrunde, eine Streckentrenneinrichtung der eingangs genannten Art bereitzustellen, welche Nachteile des Standes der Technik überwindet.

Die Aufgabe wird erfindungsgemäß gelöst durch eine gättungsgemäße Streckentrenneinrichtung mit den Merkmalen des kennzeichnenden Teils des Patentanspruches 1. Demnach ist der Isolator derart biegesteif ausgebildet und an den Stromschienen befestigt ist, dass die Biegesteifigkeit im Bereich des Überbrückungsabstandes derjenigen im Bereich der Stromschienen entspricht. Hierdurch können zwischen den Stromschienen Zug- und Druckkräfte sicher übertragen und der erforderliche Luftabstand eingehalten werden. Die gesamte Konstruktion der Streckentrenneinrichtung hat das gleiche Durchbiegungsverhalten wie die normalen Stromschienen, so dass die Streckentrenneinrichtung mit Vorteil an jeder Stelle zwischen den Stützpunkten der Stromschienen eingebaut werden kann. Aufgrund der geringen Elastizitätsunterschiede kommt es wenn überhaupt nur zu geringen Schwingungen des Stromabnehmers, wodurch eine ausgezeichnete Befahrungsgüte einer erfindungsgemäßen Streckentrenneinrichtung erzielt wird.

In einer bevorzugten Ausgestaltung der erfindungsgemäßen Streckentrenneinrichtung wird der Isolator durch einen für eine Speisespannung ausgelegten Standard-Verbundisolator mit Anschlusselementen gebildet, wobei an den Stromschienen den Anschlusselementen entsprechende Einspanneinrichtungen zur Aufnahme des Isolator befestigt sind. Mit einem besonderen Kostenvorteil können Standard-Isolatoren aus dem Oberleitungsbereich verwendet werden, da der Einsatz von teueren Sonderisolatoren vermieden wird. Gegenüber den bekannten Streckentrenneinrichtungen mit Stabisolatoren können erfindungsgemäße kürzer ausgeführt werden. Aufgrund der gegenüber Stabisolatoren größeren Durchmesser von Standard-Verbundisolatoren mit Schirmüberzug können letztere durch geeignete Einspanneinrichtungen seitlich versetzt zur Stromschienenachse eingespannt werden, um eine hindernisfreie Führung des Stromabnehmers bei Bestreichen der Streckentrenneinrichtung zu gewährleisten.

In einer vorteilhaften Ausführungsform der erfindungsgemäßen Streckentrenneinrichtung sind die Funkenhörner derart angeordnet, dass deren Lichtbogenbereich vom Isolator abgesetzt im Bereich einer der Stromschienen angeordnet ist. Hierdurch werden mit Vorteil Beschädigungen durch Funkenüberschläge und Lichtbogenausbildungen am Isolator vermieden und damit der Verschleiß an erfindungsgemäßen Streckentrenneinrichtungen reduziert.

In einer bevorzugten Ausführungsform der erfindungsgemäßen Streckentrenneinrichtung verlaufen zwei Schleifkufen wenigstens über die Länge des Überbrückungsabstandes parallel zueinander und in einem vorgebbaren Kufenabstand zum Isolator und zur zweiten Stromschiene. Hierdurch kann ein ausreichend großer und konstanter elektrischer Luftabstand der Schleifkufen zum Isolator bzw. zur zweiten Stromschiene eingehalten werden. Die Überbrückung des Isolators durch einen Stromabnehmer wird durch nur zwei symmetrisch zu den Stromschienen in einer Ebene angeordnete Schleifkufen bewerkstelligt. Diese Ebene liegt parallel zur Gleiskopfebene auf Höhe der von den Stromschienen gehaltenen Fahrdrähte.

In einer vorteilhaften Ausgestaltung der erfindungsgemäßen Streckentrenneinrichtung verlaufen die Schleifkufen von einer ersten Befestigungsstelle an der ersten Stromschiene gabelförmig nach außen bis zu einer zweiten, an einer mit der ersten Stromschiene verbundenen Kufenhalterung angeordneten Befestigungsstelle, von wo aus die Schleifkufen parallel verlaufen und im Bereich der zweiten Stromschiene kufenförmig nach oben gebogen in je ein rückgebogenes Funkenhorn mündend frei auslaufen, wobei wenigstens eine der Befestigungsstellen eine Einstellvorrichtung aufweist, mittels der die Lage einer Schleifkufe veränderbar ist. Durch diese Gabelverbindung ist eine genaue Einstellbarkeit der Schleifkufenlage möglich, was nicht nur zur erstmaligen Ausrichtung bei Inbetriebnahme sondern auch nach einer Verstellung der Schleifkufen durch äußere Gewalteinwirkung oder nach Verschleiß von Fahrdraht oder Schleifkufen erforderlich sein kann.

Vorzugsweise ist bei der erfindungsgemäßen Streckentrenneinrichtung wenigstens ein mit der zweiten Stromschiene verbundenes Funkenhorn an dieser mittels einer längs der Stromschiene verschiebbaren Befestigungseinrichtung lösbar festgesetzt. Dies erlaubt eine einfache, schnelle und genaue Einstellung des elektrischen Luftabstandes zwischen einander zugeordneten Funkenhörnern.

Weitere Eigenschaften und Vorteile der erfindungsgemäßen Streckentrenneinrichtung ergeben sich aus nachfolgender Beschreibung eines Ausführungsbeispiels anhand der Zeichnungen, in deren
FIG 1 eine erfindungsgemäße Streckentrenneinrichtung in Seitenansicht,
FIG 2 die erfindungsgemäße Streckentrenneinrichtung aus FIG 1 in Draufsicht,
FIG 3 ein Querschnitt durch die erfindungsgemäße Streckentrenneinrichtung aus FIG 1 entlang der Linie III - III,
FIG 4 ein Querschnitt durch die erfindungsgemäße Streckentrenneinrichtung aus FIG 1 entlang der Linie IV - IV,
FIG 5 ein Querschnitt durch die erfindungsgemäße Streckentrenneinrichtung aus FIG 1 entlang der Linie V - V,
schematisch veranschaulicht sind.

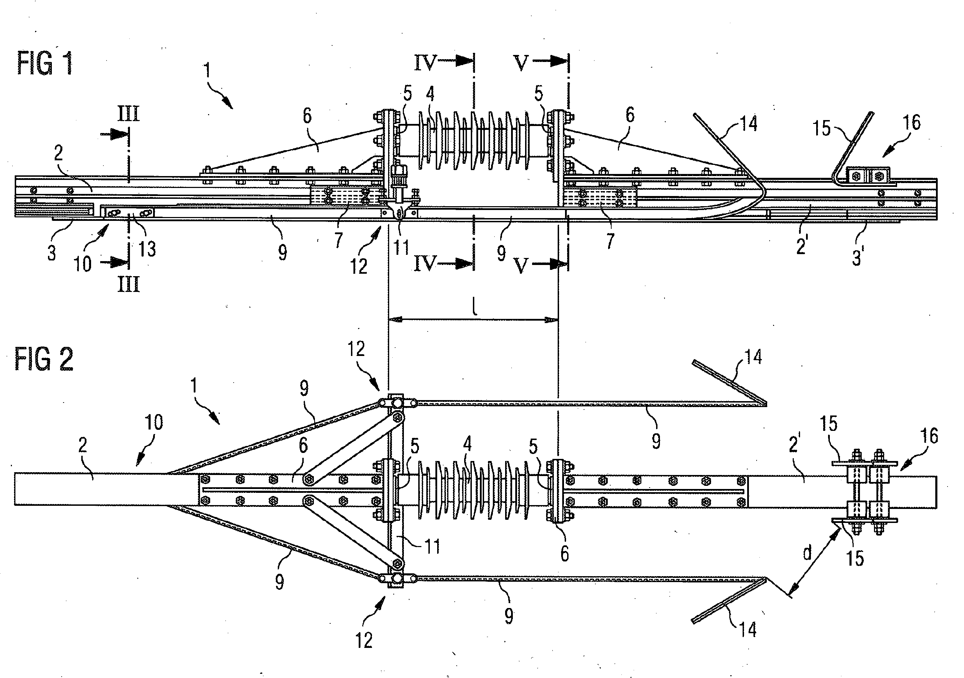

Gemäß FIG 1 und FIG 2 weist eine erfindungsgemäße Streckentrenneinrichtung 1 eine erste Stromschiene 2 zum Anschluss an einen ersten Speiseabschnitt einer Stromschienen-Oberleitungsanlage sowie eine zweite Stromschiene 2' zum Anschluss an einen zweiten, vom ersten elektrisch getrennten Speiseabschnitt auf. Die Stromschienen 2 bzw. 2' können als separate Anschlussstücke oder als Endstücke der regulär verlegten Stromschienen der Oberleitungsanlage ausgebildet sein. Die Stromschienen 2 bzw. 2' sind hintereinander linienflüchtig angeordnet. Die einander zugewandten Enden der Stromschienen 2 bzw. 2' weisen einen Überbrückungsabstand 1 auf.

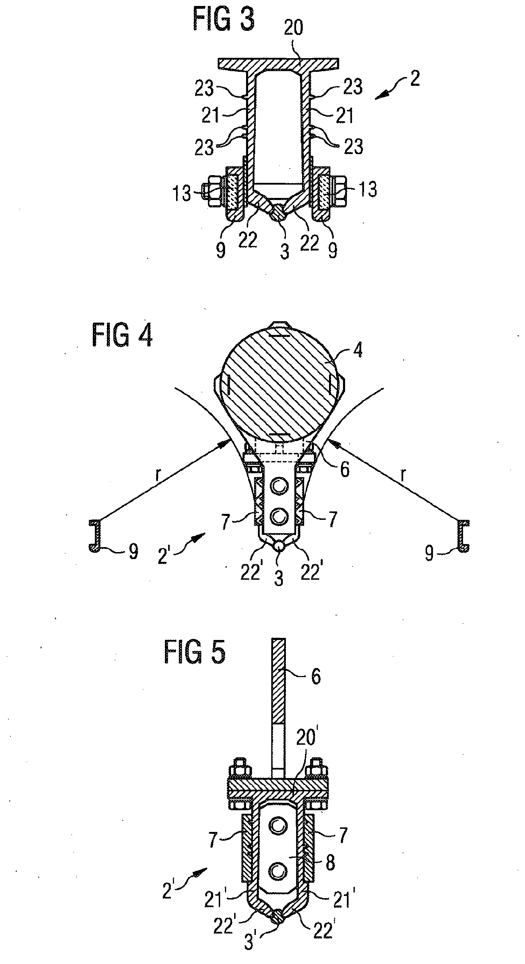

Die Stromschienen 2 bzw. 2' sind durch ein Aluminiumstranggussprofil gebildet, dessen Querschnitt in FIG 3 dargestellt ist. Es weist einen horizontal ausgerichteten Grundträger 20 bzw. 20' auf, der sich zu seinen Seitenkanten hin verjüngt, um in eine entsprechend geformte Ausnehmung einer Haltevorrichtung eingespannt an einem Bauwerk befestigt werden zu können. Von dem Querträger 20 bzw. 20' erstrecken sich zwei parallel und im Wesentlichen vertikal ausgerichtete Spannarme 21 bzw. 21', an deren unteren freien Enden zwei zangenförmig ausgebildete Klemmarme 22 bzw. 22' angeformt sind. Die Spitzen der Klemmarme 22 bzw. 22' greifen in eine Längskerbe des unter Speisespannung setzbaren Fahrdrahtes 3 bzw. 3', um diesen zu halten.
Der Überbrückungsabstand 1 wird durch einen elektrischen Isolator 4 überbrückt, der erfindungsgemäß als Standard-Verbundisolator mit Schirmüberzug ausgebildet ist und im Oberleitungsbereich an sich bekannt ist. Der Isolator 4 ist dabei derart biegesteif ausgebildet und über Einspannrichtungen 6 an den Stromschienen 2 bzw. 2' befestigt, dass der Verlauf der Biegesteifigkeit der Oberleitungsanlage über die Streckentrenneinrichtung 1 hinweg im Wesentlichen konstant ist. Die Biegesteifigkeit im Bereich des Übergangsabstandes 1 entspricht daher im Wesentlichen der Biegesteifigkeit im Bereich der Stromschienen 2 bzw. 2'. Hierdurch-werden Kontaktkraftschwankungen zwischen dem Stromabnehmer eines Triebfahrzeuges und der Oberleitungsanlage vermieden, die durch einen unstetigen Verlauf der Biegesteifigkeit hervorgerufen werden können. Des Weiteren ist es durch die Erfindung möglich, die Streckentrenneinrichtung 1 an beliebigen Stellen im Verlauf einer Oberleitungsanlage einzubauen.

Jede der Einspanneinrichtungen 6 weist eine auf dem Querträger 20 bzw. 20' und mit diesem verschraubte Grundplatte auf, von deren Mitte ein im Wesentlichen dreieckiger Stützsteg vertikal emporragt. Mit der Grundplatte und dem Stützsteg verbunden ist eine vertikal ausgerichtete und sich senkrecht zur Längsachse der Oberleitungsanlage erstreckende Halteplatte verbunden, mit der eine den Anschlusselementen 5 des Isolators 4 entsprechende Einspannplatte verschraubt ist. Je nach zu verwendendem Standard-Isolator 4 kommt eine dessen Anschlusselementen 5 entsprechende Einspannplatte zum Einsatz. So können beispielsweise Isolatoren mit als Rohrkappen, als Laschenkappen oder als Gabelkappen ausgebildete Anschlusselemente 5 eingesetzt werden. Durch diesen mechanischen Aufbau der erfindungsgemäßen Einspanneinrichtungen 6 kommt der Isolator 4 in einem gewissen Abstand oberhalb der Stromschienen 2 bzw. 2' zu liegen. Insgesamt werden hierdurch auftretende Zug- und Druckkräfte sicher übertragen und der erforderliche elektrische Luftabstand r zu den Schleifkufen 9 gewährleistet.

Zur Führung des Stromabnehmers eines Triebfahrzeuges zwischen den Stromschienen 2 bzw. 2' sind erfindungsgemäß zwei Schleifkufen 9 vorgesehen. Die Schleifkufen 9 verlaufen symmetrisch zu einer vertikalen Mittelebene der Streckentrenneinrichtung 1 in einer Ebene, die parallel zur Gleiskopfebene bzw. Fahrebene und auf Höhe des Fahrdrahtes 3 bzw. 3' angeordnet ist. Beginnend an einer ersten Befestigungsstelle 10 an der ersten Stromschiene 2 verlaufen die Schleifkufen 9 gabelförmig nach außen bis zu einer zweiten Befestigungsstelle 12, die von einer Kufenhalterung 11 gebildet wird, und von dort parallel bis auf Höhe der zweiten Stromschiene 2', wo sie kufenförmig nach oben gebogen in je ein rückgebogenes Funkenhorn 14 mündend frei auslaufen. Die Kufenhalterung 11 umfasst einen am Ende der ersten Stromschiene 2 befestigten Quersteg, der zusätzlich durch zwei im 45° Winkel verlaufende Befestigungslaschen an der Grundplatte der Einspanneinrichtung 6 fixiert ist.

Wie aus FIG 5 ersichtlich, ist der Quersteg der Kufenhalterung 11 mit einem zwischen die Spannarme 21' eingeschobenen Einspannblock 8 verschraubt, der das Gegenstück zu den von außen an den Spannarmen 21' anliegenden Klemmlaschen 7 bildet. Zum Spannen werden je vier Schrauben angezogen, die die Klemmlaschen 7 und die Spannarme 21' durchsetzen und seitlich in den Einspannblock 8 eingreifen.

Zur Einstellung der Lage der Schleifkufen 9 relativ zu den Fahrdrähten 3 bzw. 3' sind an den Befestigungsstellen 10 und 12 Einstellvorrichtungen vorgesehen. Die Schleifkufen 9 weisen gemäß FIG 3 einen im Wesentlichen J-förmigen Querschnitt auf, in dessen Nut auf Höhe der ersten Befestigungsstelle 10 eine Lochplatte 13 eingelegt ist, die zwei parallel zueinander aber zum Fahrdraht 3 geneigt verlaufende Langlöcher aufweist, durch die eine beide Stromschienenseiten durchdringende Schraubverbindung verläuft. Wird eine Schleifkufe 9 relativ zur Schraubverbindung längs des Fahrdrahtes 3 verschoben, so verändert sich ihre vertikale Position im Verhältnis der Neigung der Langlöcher. Durch diese Einstellvorrichtung 13 kann also der Neigungswinkel der Schleifkufen 9 relativ zum Fahrdraht 3 bzw. 3' eingestellt werden. Die absolute Höhe der Schleifkufen 9 wird durch eine Schraub- und Klemmverbindung, die an den äußeren Enden des Quersteges der Kufenhalterung 11 lagert, eingestellt. Auf diese Weise wird eine einfache und genaue Einstellbarkeit der Lagen der Schleifkufen 9 erreicht, um Verstellungen der Schleifkufen 9 durch äußere Gewalteinwirkung zu korrigieren oder um Verschleißerscheinungen am Fahrdraht 3 bzw. 3' zu kompensieren, so dass stets ein stufenfreier Übergang des Stromabnehmers über die Streckentrenneinrichtung 1 erzielt werden kann. Außerdem wird ein ausreichend großer Schleifkufenabstand r zum Isolator 4 gemäß FIG 4 einfach einstellbar.

Den schleifkufenseitigen Funkenhörnern 14 stehen zwei stromschienenseitige Funkenhörner 15 gegenüber, die über eine Befestigungseinrichtung 16, die beispielsweise als Schraub-Klemmverbindung ausgebildet ist, lösbar mit der Stromschiene 2' verbunden ist. Die Schraub-Klemmverbindung ermöglicht es, die Funkenhörner 15 gemeinsam längs der zweiten Stromschiene 2' zu verschieben und an beliebigen Positionen zu arretieren. Hierdurch ist der vorgesehene Funkenhornabstand d zwischen einander zugeordneten Funkenhörnern 14 und 15 schnell und genau einstellbar. Die Funkenhörner 14 bzw. 15 sind dabei derart angeordnet, dass ihr Lichtbogenbereich vom Isolator 4 abgesetzt im Bereich der zweiten Stromschiene 2' angeordnet ist. Hierdurch wird der Isolator 4 vor Beschädigungen bei einem Funkenüberschlag geschützt.

Mit Vorteil finden bei der erfindungsgemäßen Streckentrenneinrichtung 1 Standard-Isolatoren aus dem Oberleitungsbereich Verwendung, so dass für eine Stromschiene-Oberleitungsanlage beispielsweise nur ein Isolatortyp zum Einsatz kommen kann. Mit der erfindungsgemäßen Streckentrenneinrichtung können kurze Bauweisen bei geringen Kosten verwirklicht werden. Aufgrund des Biegesteifigkeitsverlaufs erfindungsgemäßer Streckentrenneinrichtungen weisen diese das gleiche Durchbiegungsverhalten auf wie normale Stromschienensegmente. Die Elastizitätsunterschiede zwischen Stromschienen 2 bzw. 2' und dem Isolatorbereich sind viel geringer als beispielsweise bei der Verwendung von Isolatorstäben, was insgesamt zur einer besseren Befahrungsgüte führt.

## Patentansprüche

1. Streckentrenneinrichtung (1) für eine Stromschienen-Oberleitungsanlage zur Energieeinspeisung in ein elektrisches Triebfahrzeug, wobei eine erste Stromschiene (2) eines ersten Speiseabschnittes und eine zweite Stromschiene (2') eines zweiten, vom ersten elektrisch getrennten Speiseabschnittes in einem Überbrückungsabstand (1) hintereinander linienflüchtig angeordnet sind, mit einem zwischen den Stromschienen (2, 2') angeordneten elektrischen Isolator (4), mit Schleifkufen (9) zur Führung eines Stromabnehmers des Triebfahrzeugs zwischen den Stromschienen (2, 2'), und mit Funkenhörnern (14, 15) zur Lichtbogenableitung,
wobei der Isolator (4) derart biegesteif ausgebildet und an den Stromschienen (2, 2') befestigt ist, dass die Biegesteifigkeit im Bereich des Überbrückungsabstandes (1) derjenigen der Stromschienen (2, 2') entspricht.

2. Streckentrenneinrichtung (1) nach Anspruch 1,
wobei der Isolator (4) durch einen für eine Speisespannung ausgelegten Standard-Verbundisolator mit Anschlusselementen (5) gebildet wird, und wobei an den Stromschienen (2, 2') den Anschlusselementen (5) entsprechende Einspanneinrichtungen (6) zur Aufnahme des Isolator (4) befestigt sind.

3. Streckentrenneinrichtung (1) nach Anspruch 1 oder 2,
wobei die Funkenhörner (14, 15) derart angeordnet sind, dass deren Lichtbogenbereich vom Isolator (4) abgesetzt im Bereich einer der Stromschienen (2') angeordnet ist.

4. Streckentrenneinrichtung (1) nach einem der Ansprüche 1 bis 3, wobei zwei Schleifkufen (9) wenigstens über die Länge des Überbrückungsabstandes (1) parallel zueinander und in einem vorgebbaren Kufenabstand (r) zum Isolator (4) verlaufen.

5. Streckentrenneinrichtung (1) nach einem der Ansprüche 1 bis 4, wobei die Schleifkufen (9) von einer ersten Befestigungsstelle (10) an der ersten Stromschiene (2) gabelförmig nach außen bis zu einer zweiten, an einer mit der ersten Stromschiene (2) verbundenen Kufenhalterung (11) angeordneten Befestigungsstelle (12) verlaufen, von wo aus die Schleifkufen (9) parallel verlaufen und im Bereich der zweiten Stromschiene (2') kufenförmig nach oben gebogen in je ein rückgebogenes Funkenhorn (14) mündend frei auslaufen, wobei wenigstens eine der Befestigungsstellen (10, 12) eine Einstellvorrichtung (13) aufweist, mittels der die Lage einer Schleifkufe (9) veränderbar ist.

6. Streckentrenneinrichtung (1) nach einem der-Ansprüche 1 bis 5, wobei wenigstens ein mit der zweiten Stromschiene (2') verbundenes Funkenhorn (15) an dieser mittels einer längs der Stromschiene (2') verschiebbaren Befestigungseinrichtung (16) lösbar festgesetzt ist.

## Claims

1. Track isolating device (1) for a busbar overhead line installation for feeding power to an electrical locomotive, wherein a first busbar (2) of a first feed section and a second busbar (2') of a second feed section, which is electrically isolated from the first, are arranged one behind the other, aligned in a line, at a bridging interval (1), having an electrical isolator (4) arranged between the busbars (2, 2'), having skids (9) for guiding an electrical pickup on the locomotive between the busbars (2, 2'), and having spark horns (14, 15) for arc dissipation,
wherein the isolator (4) is designed to be hard to bend and is attached to the busbars (2, 2') such that the bending stiffness in the area of the bridging separation (1) corresponds to that of the busbars (2, 2').

2. Track isolating device (1) according to claim 1,
wherein the isolator (4) is formed by a standard composite isolator having connection elements (5) designed for a feed voltage, and wherein clamping facilities (6) corresponding to the connection elements (5) for mounting the isolator (4) are attached to the busbars (2, 2').

3. Track isolating device (1) according to claim 1 or 2,
wherein the spark horns (14, 15) are arranged such that the arc zone thereof is arranged offset from the isolator (4) in the region of one of the busbars (2').

4. Track isolating device (1) according to one of claims 1 to 3, wherein two skids (9) run parallel to one another and at a preselectable skid spacing (r) from the isolator (4) at least over the length of the bridging separation (1).

5. Track isolating device (1) according to one of claims 1 to 4, wherein the skids (9) run from a first attachment point (10) on the first busbar (2) outwards in bifurcated fashion as far as a second attachment point (12), arranged at a skid holder (11) connected to the first busbar (2), from which point the skids (9) run parallel and, in the region of the second busbar (2'), are bent upwards in the manner of skids and each end freely in a back-bent spark horn (14), wherein at least one of the attachment points (10, 12) has an adjusting device (13) by means of which the position of a skid (9) can be altered.

6. Track isolating device (1) according to one of claims 1 to 5, wherein at least one spark horn (15) connected to the second busbar (2') is fastened to the latter in detachable fashion by means of an attaching device (16) which can be slid along the busbar (2').

## Revendications

1. Dispositif ( 1 ) de sectionnement pour une installation de fil de contact de rails conducteurs pour l'alimentation en énergie d'une locomotive électrique, un premier rail ( 2 ) conducteur d'un premier tronçon d'alimentation et un deuxième rail ( 2' ) conducteur d'un deuxième tronçon d'alimentation, séparé électriquement du premier, étant disposés en alignement linéaire l'un derrière l'autre à une distance ( 1 ) de court-circuit, comprenant un isolateur ( 4 ) électrique disposé entre les rails ( 2, 2' ) conducteurs, comprenant des patins ( 9 ) de frottement pour le guidage d'un pantographe de la locomotive entre les rails ( 2, 2' ) conducteurs et comprenant des cornes ( 14, 15 ) d'arc pour la décharge de l'arc électrique,
dans lequel l'isolateur ( 4 ) est constitué rigide en flexion et est fixé aux rails ( 2, 2' ) conducteurs, de manière à ce que la rigidité à la flexion, dans la zone de la distance ( 1 ) de court-circuit, corresponde à celle des rails ( 2, 2' ) conducteurs.

2. Dispositif ( 1 ) de sectionnement suivant la revendication 1,
dans lequel l'isolateur est formé par un isolateur composite standard conçu pour une tension d'alimentation et ayant des éléments ( 5 ) de connexion et dans lequel des éléments ( 6 ) de blocage, correspondant aux éléments ( 5 ) de connexion, sont, pour la réception de l'isolateur ( 4 ), fixés aux rails ( 2, 2' ) conducteurs.

3. Dispositif ( 1 ) de sectionnement suivant la revendication 1 ou 2, dans lequel les cornes ( 14, 15 ) d'arc sont disposées de manière à ce que leur zone d'arc électrique soit, dans la zone de l'un des rails ( 2' ) conducteurs, à distance de l'isolateur ( 4 ).

4. Dispositif ( 1 ) de sectionnement suivant l'une des revendications 1 à 3, dans lequel deux patins ( 9 ) de frottement s'étendent, au moins sur la longueur de la distance ( 1 ) de court-circuit, parallèlement entre eux et à une distance ( r ) de patin pouvant être prescrite par rapport à l'isolateur ( 4 ).

5. Dispositif ( 1 ) de sectionnement suivant l'une des revendications 1 à 4, dans lequel les patins ( 9 ) de frottement s'étendent d'un premier point ( 10 ) de fixation sur le premier rail ( 2 ) conducteur en forme de fourchette vers l'extérieur jusqu'à un deuxième point ( 12 ) de fixation disposé sur une fixation ( 11 ) de patin reliée au premier rail ( 2 ) conducteur, deuxième point ( 12 ) de fixation à partir duquel les patins ( 9 ) de frottement s'étendent parallèlement et, coudés vers le haut en forme de patin dans la zone du deuxième rail ( 2' ) conducteur, partent librement en débouchant dans respectivement une corne ( 14 ) d'arc recourbée, au moins l'un des points ( 10, 12 ) de fixation ayant un dispositif ( 13 ) de réglage, au moyen duquel la position d'un patin ( 9 ) de frottement peut être modifiée.

6. Dispositif ( 1 ) de sectionnement suivant l'une des revendications 1 à 5, dans lequel au moins une corne ( 15 ) d'arc reliée au deuxième rail ( 2' ) conducteur est fixée de manière amovible à celui-ci au moyen d'un dispositif ( 16 ) de fixation pouvant être déplacé le long du rail ( 2' ) conducteur.
